# EUROPÄISCHE PATENTSCHRIFT

(11) **EP 2 682 304 B1**
(45) Veröffentlichungstag und Bekanntmachung des Hinweises auf die Patenterteilung: **04.12.2019**
(21) Anmeldenummer: 13170890.1
(22) Anmeldetag: 06.06.2013
(51) Int. Cl.: B60Q 1/068

(54) **Verstelleinrichtung für einen Kraftfahrzeugscheinwerfer**
Adjustment device for a motor vehicle headlamp
Dispositif de réglage pour un phare de véhicule automobile

(30) Priorität: 02.07.2012 AT 7392012
(43) Veröffentlichungstag der Anmeldung: 08.01.2014
(73) Patentinhaber: ZKW Group GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- FR-A1- 2 598 127
- JP-U- H03 119 904
- US-A- 4 737 891
- US-A1- 2003 043 591
- US-A1- 2005 145 050

## Beschreibung

Die Erfindung bezieht sich auf eine Verstelleinrichtung für einen Kraftfahrzeugscheinwerfer, welcher zumindest eine in einem Scheinwerfergehäuse untergebrachte, in zumindest einer Richtung verschwenkbare Leuchteinheit besitzt, wobei die Verstelleinrichtung eine Gewindespindel aufweist, die über ein Kegelradgetriebe mit Hilfe eines außerhalb des Gehäuses liegenden Betätigungsrades verdrehbar ist und die Gewindespindel mit einer Spindelmutter in Eingriff steht, deren Bewegung auf einen an der zumindest einen verschwenkbaren Leuchteinheit angreifenden Verstellkopf übertragen ist.

Eine Verstelleinrichtung dieser Art ist aus der US 4,737,891 A bekannt geworden, bei welcher ein zweiarmiger Hebel vorgesehen ist, der einerseits an einer Spindelmutter über einen Zapfen angelenkt ist und der an seinem anderen vertikalen Arm einen Schlitz aufweist, in welchem ein Zapfen eingreift, der am Ende einer Schubstange sitzt, die in einer Führung geführt ist. An dem anderen Ende besitzt die Stange eine Kugel, die an einem mit dem Scheinwerfer fest verbundenen Sitz angreift.

Nachteilig an dieser Verstelleinrichtung ist der Umstand, dass die Verwendung der Schubstange einen zusätzlichen Aufwand für ihre Führung verursacht und Gelenkanbindungen nicht nur zwischen Schubstange und Scheinwerfer, sondern auch zwischen Kipphebel und Schubstange benötigt. Die Schubstange erhöht weiters den Bauraumbedarf und verkompliziert den Einbau. Weiters ist die beschriebene Verstelleinrichtung nur für einen Anbau außen an ein Gehäuse und das Bewegen des gesamten Scheinwerfers, nicht jedoch für die Übertragung der Verstellbewegung von außen in das geschlossene Scheinwerfergehäuse geeignet.

Eine ähnliche Verstelleinrichtung ist aus der DE 10 2004 024 315 A1 bekannt geworden. Die Einzelteile dieser bekannten Verstelleinrichtung müssen sowohl von der Innenseite als auch von der Außenseite des Scheinwerfergehäuse zusammengebaut werden, wobei auch nicht auszuschließen ist, dass Feuchtigkeit zumindest in das Kegelradgetriebe eindringt. Der Konstruktion dieser bekannten Verstelleinrichtung entsprechend sind deren Einbau sowie ein allfälliges Ausbauen zeitaufwändig.

Bei einer anderen, aus der EP 2 327 583 B1 bekannt gewordenen Verstelleinrichtung ist zwar das Kegelradgetriebe als Einheit ausgebildet, doch es erfolgt auch in diesem Fall der Einbau in einen Scheinwerfer in mehreren Arbeitsschritten. Abgedichtet ist in diesem Fall das Betätigungsrad gegen das Gehäuse, wobei eine Wellenverbindung von dem Betätigungsrad zu dem Getriebe so langgestreckt ist, dass ein besonderer Trichter an der Getriebeeinheit für den Zusammenbau erforderlich ist. Auch in diesem Fall muss das Betätigungsrad zunächst von der Außenseite des Scheinwerfergehäuses eingesetzt und sodann von Innen durch eine Gabel gesichert werden. All dies führt zu einem relativ langwierigen Einbauvorgang.

Verstelleinrichtungen, die als vom Scheinwerfer trennbare Module ausgebildet sind, gehen beispielsweise aus der US 2003043591 A1, der US 2005145050 A1 und der US 6, 257,747 als bekannt hervor.

Ein weiters Problem liegt darin, dass nach dem Stand der Technik Gleitbahnen für Verstellelemente in dem Schweinwerfergehäuse ausgebildet werden, hier jedoch die Entformungstechnik der sehr kompliziert ausgebildeten Spritzgussteile Grenzen bezüglich der freien Wählbarkeit der Gleitbahnrichtung setzt. Tatsächlich können Gleitbahnen relativ problemlos nur in Richtung der optischen Achse (Fahrtrichtung des Kfz) hergestellt werden.

Eine Aufgabe der Erfindung liegt somit in der Schaffung einer Verstelleinrichtung, die im Gegensatz zu dem Stand der Technik kompakt aufgebaut ist, rasch und ohne besondere Werkzeuge eingebaut werden kann, für vielerlei Verstellvarianten geeignet ist und auch an bestimmte Scheinwerfer rasch individuell angepasst werden kann, ohne dass noch kompliziertere Gussformen benötigt werden.

Diese Aufgabe wird mit einer Verstelleinrichtung der eingangs genannten Art gelöst, bei welcher erfindungsgemäß die Verstelleinrichtung als von dem Scheinwerfergehäuse trennbares Verstellmodul (M) ausgebildet ist und einen um eine Schwenkachse schwenkbaren, im Inneren des Scheinwerfergehäuses angeordneten und an einem inneren Abschnitt (I) des Verstellmoduls (M) gelagerten Kipphebel aufweist, der über eine Gelenkverbindung mit der Spindelmutter in Antriebsverbindung steht, und der Verstellkopf an dem Kipphebel sitzt.

Dank einer solchen Hebelkonstruktion lässt sich eine individuelle Anpassung der Verstellung an bestimmte Scheinwerfer einfach erreichen. Dabei ist es vorteilhaft, wenn der Kipphebel mit Hilfe von Achsstummeln in zwei gegenüberliegenden Schlitzen eines inneren Gehäuseabschnitts gelagert ist.

Um zu einer kompakten und leichten Ausführung zu gelangen, empfiehlt es sich, wenn der Kipphebel zwei zueinander im Wesentlichen parallele Stege besitzt und zwischen den Stegen der Verstellkopf sowie ein Mitnehmerkopf angeordnet sind, wobei der Mitnehmerkopf unter Bildung der Gelenkverbindung von einer Mitnehmergabel umfasst ist. Hierbei ist es sinnvoll, wenn die Mitnehmergabel Teil eines mit der Spindelmutter verbundenen Gleitstücks ist.

Bei einer anderen vorteilhaften Variante kann vorgesehen sein, dass die Verstelleinrichtung als von dem Scheinwerfergehäuse trennbares Modul ausgebildet ist, welches mit einem inneren Abschnitt in das Scheinwerfergehäuse einführbar und mit diesem über einen Bajonettverschluss verbindbar ist, wobei zwischen einem zu einem äußeren Abschnitt des Verstellmoduls gehörigen Ringflansch und dem Scheinwerfergehäuse ein Dichtring vorgesehen ist. Hierdurch erhält man eine universell einsetzbare und problemlos einbaubare Verstelleinrichtung, die den inneren Aufbau des Scheinwerfers sowie seines Gehäuses vereinfacht und insbesondere einfachere Spritzgussformen ermöglicht.

Eine besonders vorteilhafte Weiterentwicklung zeichnet sich dadurch aus, dass das Modul einen ersten rohrförmigen Gehäuseabschnitt besitzt, in dem eine mit dem Betätigungsrad und einem ersten Kegelzahnrad verbundene Welle untergebracht ist, sowie einen zweiten rohrförmigen Gehäuseabschnitt besitzt, der unter einem im Wesentlichen dem Kegelradgetriebe zueignen Winkel zu dem ersten Gehäuseabschnitt verläuft, bei eingebautem Modul die Wand des Scheinwerfergehäuses durchsetzt und ein zweites Kegelzahnrad, zumindest einen Teil der Gewindespindel und die Spindelmutter aufnimmt.

Wenn die Drehachsen der beiden Kegelzahnräder unter einem rechten Winkel zueinander verlaufen ergibt sich eine technisch einfache und kostengünstige Realisierung.

Die Erfindung bezieht sich weiters auf einen Kraftfahrzeugscheinwerfer, der in vorteilhafter Weise mit zumindest einer erfindungsgemäßen Verstelleinrichtung ausgerüstet ist.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 in schaubildlicher Darstellung einen Kraftfahrzeugscheinwerfer mit einer erfindungsgemäßen Verstelleinrichtung entsprechend einer ersten Ausführungsform bei größtenteils weggeschnittenem Scheinwerfergehäuse,
Fig. 2 die in Fig. 1 gezeigte erste Ausführungsform der Verstelleinrichtung in schaubildlicher Darstellung und in größerem Maßstab,
Fig. 3 eine Ansicht ähnlich wie Fig. 2, jedoch mit teilweise weggeschnittenem Gehäuse,
Fig. 4 eine Draufsicht auf den Rahmenaufbau des Scheinwerfers nach Fig. 1 und die Verstelleinrichtung,
Fig. 5 eine zweite Ausführungsform einer Verstelleinrichtung nach der Erfindung in einer Darstellung entsprechend Fig. 1 und
Fig. 6 eine Ansicht ähnlich wie Fig. 5, jedoch mit teilweise weggeschnittenem Gehäuse.

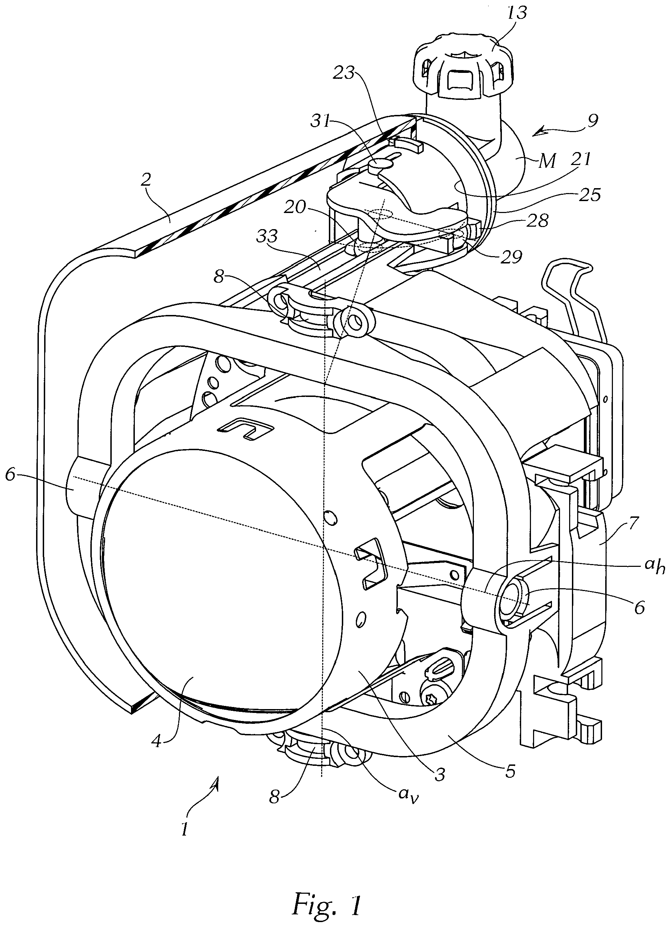

Zunächst auf Fig. 1 Bezug nehmend erkennt man einen Kraftfahrzeugscheinwerfer 1, der in einem Gehäuse 2 (nur teilweise sichtbar) eine Leuchteinheit 3 aufweist, die beispielsweise eine Linse 4 an ihrer Frontseite besitzt. Im vorliegenden Fall ist die Leuchteinheit 3 um zwei Achsen aᵥ und aₕ verstellbar. Im Prinzip sind ein äußerer Tragrahmen 5, der um eine vertikale Achse aᵥ in Lagern 8 verschwenkbar ist, sowie ein innerer Tragrahmen 7, der um eine horizontale Achse aₕ in Lagern 6 verschwenkbar ist, im Sinne einer kardanischen Aufhängung der Leuchteinheit 3 vorgesehen.

Für das Verstellen um die vertikale Achse aᵥ entsprechend einem rechts/links Verschwenken ist eine erfindungsgemäße Verstelleinrichtung 9 vorgesehen, die als kompaktes Modul M ausgebildet ist und in den Fig. 1 bis 3 in einer ersten Ausführungsform gezeigt ist.

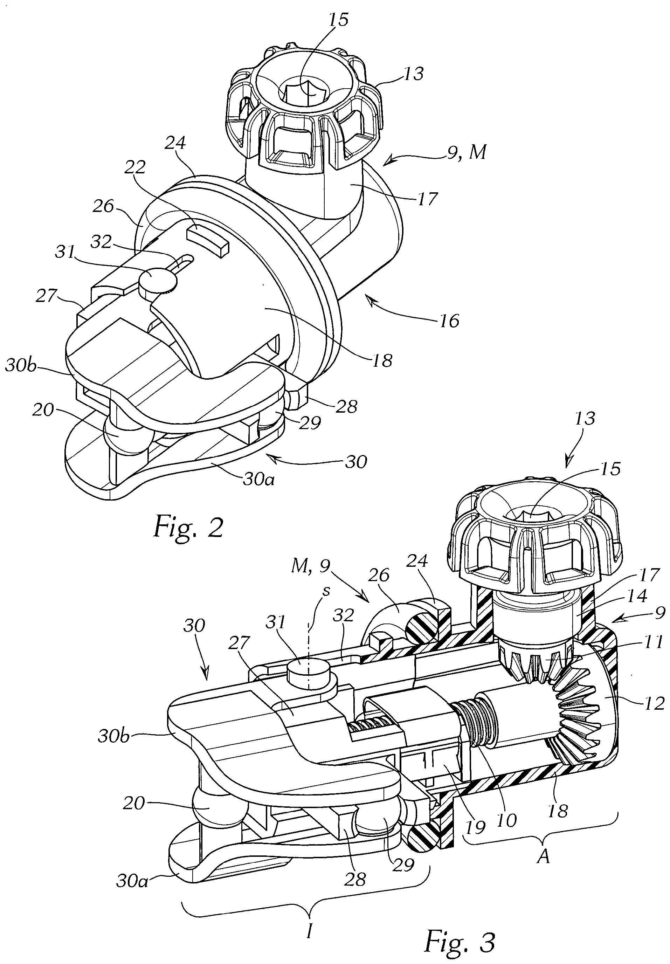

Wie aus den Fig. 2 und 3 hervorgeht, weist die Verstelleinrichtung 9 eine Gewindespindel 10 auf, die über ein Kegelradgetriebe 11, 12 mit Hilfe eines Betätigungsrades 13 verdrehbar ist. Im vorliegenden Fall ist das Betätigungsrad 13 über eine kurze Welle 14 mit einem ersten, als Ritzel ausgebildeten Kegelzahnrad 11 verbunden, wobei es zum Verdrehen mit Hilfe eines Werkzeugs beispielsweise einen Innensechskant 15 besitzen kann. Das Kegelzahnrad 11 steht mit einem zweiten, als Tellerrad ausgebildeten Kegelzahnrad 12 in Eingriff, das auf Drehung mit der Gewindespindel 10 verbunden ist. Die Achsen der Gewindespindel 10 und der Welle 14 stehen im vorliegenden Fall unter einem rechten Winkel zueinander und schneiden einander, doch ist beides keine Notwendigkeit im Zusammenhang mit der Erfindung.

Die als Modul M ausgeführte Verstelleinrichtung 9 besitzt ein Gehäuse 16, das im Wesentlichen aus einem ersten Gehäuseabschnitt 17 und einem zweiten Gehäuseabschnitt 18 besteht. Beide Gehäuseabschnitte 17, 18 sind im Wesentlichen rohrförmig, wobei in dem ersten Gehäuseabschnitt 17 die mit dem Betätigungsrad 13 und dem ersten Kegelzahnrad bzw. Ritzel 11 verbundene Welle 14 untergebracht ist. Der zweite rohrförmige Gehäuseabschnitt 18, der unter einem im Wesentlichen dem Kegelradgetriebe zueignen Winkel, im vorliegenden Fall 90°, zu dem ersten Gehäuseabschnitt 17 verläuft, nimmt das zweite Kegelzahnrad 12 und zumindest eine Teillänge der Gewindespindel 10 auf.

Auf der Gewindespindel 10 sitzt eine mit ihr in Eingriff stehende Spindelmutter 19, deren lineare Bewegung auf einen an der verstellbaren Leuchteinheit 3 des Scheinwerfers 1 angreifenden Verstellkopf 20 übertragen wird - im vorliegenden Fall über eine noch zu erläuternde Hebelanordnung. Bei diesem Ausführungsbeispiel ist der Verstellkopf 20 kugelartig ausgeformt.

Die Verstelleinrichtung 9 ist als von dem Scheinwerfergehäuse 2 trennbares Verstellmodul M ausgebildet, welches mit einem inneren Abschnitt I in eine Öffnung 21 (Fig. 1) des Scheinwerfergehäuses 2 einführbar und mit diesem über einen Bajonettverschluss 22, 23 verbindbar ist. Zur Realisierung des Bajonettverschlusses sind beispielsweise auf dem zweiten rohrförmigen Gehäuseabschnitt 18 drei kurze Stege 22 ausgebildet, welchen mit im Bereich der Gehäuseöffnung 21 ausgebildeten Führungsschlitzen 23 des Gehäuses 2 zusammenwirken können. Von diesen Führungsschlitzen ist lediglich ein kurzer Abschnitt in Fig. 1 ersichtlich. Dem Fachmann stehen natürlich auch andere Ausbildungen des Bajonettverschlusses mit mehr oder weniger Stegen oder Stiften zur Verfügung.

Zwischen einem zu dem äußeren Gehäuseabschnitt A gehörigen Ringflansch 24 und einer die Öffnung 21 in dem Scheinwerfergehäuse 2 umgebenden kreisringförmigen Gegenfläche, die in Fig. 1 mit dem Bezugszeichen 25 angedeutet ist, ist ein Dichtring 26, z. B ein O-Ring vorgesehen.

Zum Einbau der Verstelleinrichtung 9 wird das Modul M mit dem zweiten rohrförmigen Gehäuseabschnitt 18 in die Öffnung 21 des Scheinwerfergehäuses 2 gesteckt und dann um beispielsweise 60° verdreht, wodurch das Modul in die in Fig. 1 gezeigte Lage bezüglich des Gehäuses 2 gelangt. Beim Verschließen des Bajonettverschlusses 22-23 wird auch der Dichtring 26 zwischen dem Ringflansch 24 und der Gegenfläche 25 zusammengedrückt, um eine zuverlässige Dichtung zu ergeben, welche das Eindringen von Feuchtigkeit in das Innere des Scheinwerfergehäuses 2 hintan hält.

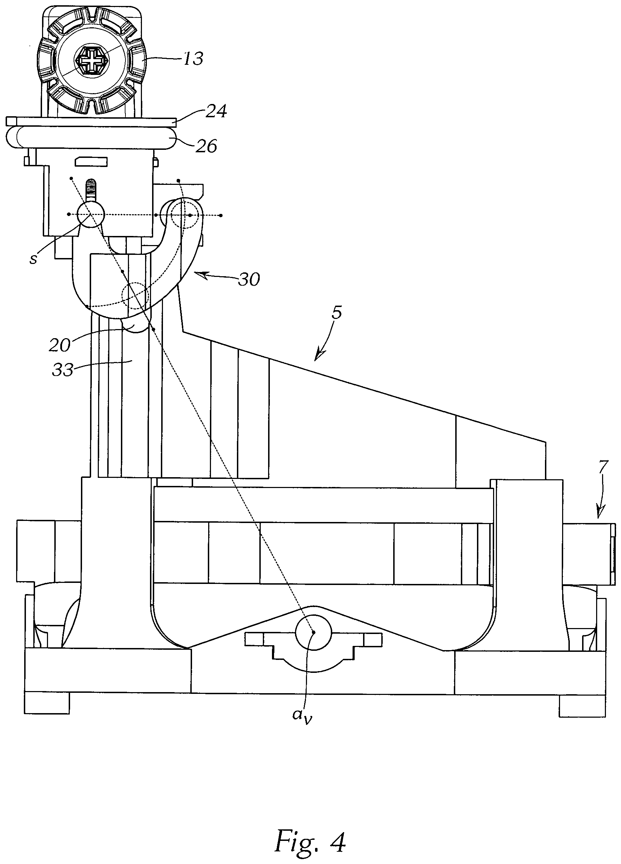

Im Fall der Ausführung nach den Fig. 1 bis 4 wird die lineare Bewegung der Spindelmutter 19 zunächst unmittelbar auf ein Gleitstück 27 übertragen, das bei diesem Beispiel mit der Spindelmutter 19 einstückig ausgebildet ist, und welches eine Mitnehmergabel 28 besitzt. In diese Mitnehmergabel 28 greift ein Mitnehmerkopf 29 eines Kipphebels 30 ein, welcher zwei parallele Stege 30a, 30b besitzt, zwischen welchen einerseits der genannte Mitnehmerkopf 29 und andererseits der gleichfalls schon erwähnte Verstellkopf 20 sitzen. Der Kipphebel 30 ist um eine Schwenkachse s (siehe Fig. 3) verschwenkbar und er besitzt zu diesem Zweck zwei Wellenstummel 31, die in Schlitze 32 des zweiten Gehäuseabschnitts 18 eingeklipst werden können. In den Zeichnungen ist nur der jeweils "obere" Stummel 31 bzw. Schlitz 32 ersichtlich.

Es ist ersichtlich, dass bei einem Verdrehen des Betätigungsrades 13 über die Kegelzahnräder 11 und 12 auch die Gewindespindel 10 verdreht und in der Folge die Spindelmutter 19 verschoben wird - und mit ihr das Gleitstück 27 mit der Gabel 28. Über den Mitnehmerkopf 29 führt dies zu einem Verschwenken des Kipphebels 30 um die Schwenkachse s, wobei auch der Verstellkopf 20 eine seinem fiktiven Hebelarm entsprechende Schwenkbewegung mitmacht. Die Gabel 28 bildet mit dem Mitnehmerkopf 29 eine Gelenkverbindung 28-29, die auch anders ausgebildet werden kann. Beispielsweise können Gabel und Kopf vertauscht angeordnet sein.

Um die Leuchteinheit 3 verschwenken bzw. verstellen zu können, greift der Verstellkopf 20 in eine Gleitbahn 33 ein, die mit dem äußeren Tragrahmen 5 verbunden ist. Das Verschwenken des Verstellkopfes 20 um die Schwenkachse s führt daher bei einem Gleiten des Kopfes 20 in der Bahn 33 zu einem Verschwenken des äußeren Rahmens 5 um die Achse av.

Dank des nun in der Verstelleinrichtung enthaltenen Gleitstücks 27 erübrigt sich die in der Herstellung kritische Ausbildung von Gleitbahnen für die Verstellung der Leuchteinheit in dem Scheinwerfergehäuse.

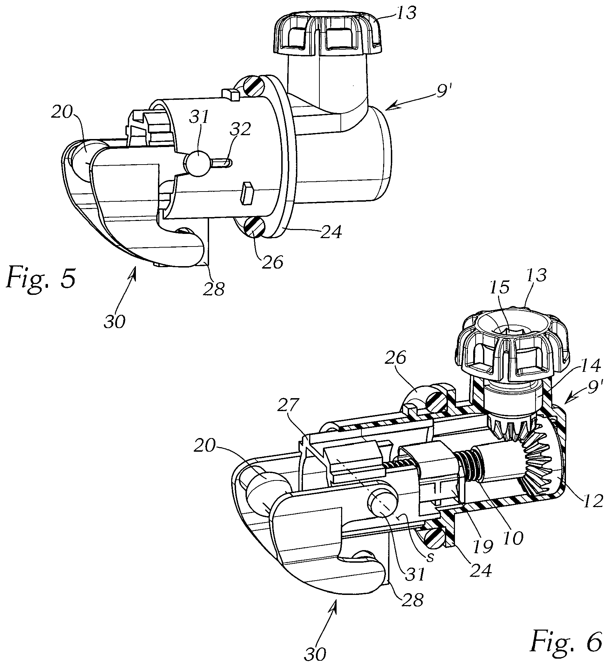

Die in den Fig. 5 und 6 dargestellte Ausführungsform einer Verstelleinrichtung 9' der Erfindung unterscheidet sich von der ersten Ausführungsform lediglich dadurch, dass die Schwenkachse s des Kipphebels 30 bei der ersten Ausführungsform (Fig. 1 bis 3) parallel zur Drehachse des Betätigungsrades 13 verläuft, wogegen sie bei der zweiten Ausführungsform normal auf eine durch die Drehachse der Gewindespindel 10 und die Drehachse des Betätigungsrades 13 verlaufende Ebene steht. Berücksichtigt man den Umstand, dass aus wartungstechnischen Gründen eine Anordnung von Einstell(betätigungs)rädern an der Oberseite eines Scheinwerfergehäuses erwünscht ist, erkennt man, dass die beiden Ausführungsformen für Verstellungen einer Leuchteinheit um unterschiedliche Achsen geeignet sind. Beispielsweise kann die Verstelleinrichtung 9 nach den Fig. 1 bis 4 bei einem Scheinwerfer für ein Verstellen um eine vertikale Achse dienen, wobei bei diesem Scheinwerfer weiters eine Verstelleinrichtung nach den Fig. 5 und 6 für ein Verstellen um eine horizontale Achse vorgesehen ist und in entsprechender, hier nicht gezeigter Weise z.B. an dem inneren Tragrahmen 7 des Scheinwerfers 1 angreift.

Die Erfindung ist in den Figuren an Hand von einer einzelnen Leuchteinheit 3 dargestellt, welche auf spezielle Weise wie eingangs beschrieben um zwei Achsen in dem Gehäuse des Scheinwerfers schwenkbar gelagert ist. Grundsätzlich denkbar und vom Schutzumfang der Ansprüche mit umfasst ist allerdings auch eine nicht dargestellte Ausführungsform, bei welcher die eine Leuchteinheit, vorzugsweise aber zwei oder mehrere Leuchteinheiten auf einem gemeinsamen Leuchteinheiten-Träger fix angeordnet sind und dieser Leuchteinheiten-Träger (analog zu der eingangs beschriebenen Lagerung der einzelne Leuchteinheit) um zwei Achsen verschwenkbar gelagert ist, sodass die Verstelleinheit alle auf dem Leuchteinheiten-Träger angeordneten Leuchteinheiten verschwenkt. Der beschriebene Verschwenckopf greift also über den zwischen geschalteten Leuchteinheiten-Träger an der einen Leuchteinheit, vorzugsweise den mehreren Leuchteinheiten an.

## Patentansprüche

1. Verstelleinrichtung (9) für einen Kraftfahrzeugscheinwerfer (1), welcher zumindest eine in einem Scheinwerfergehäuse (2) untergebrachte, in zumindest einer Richtung verschwenkbare Leuchteinheit (3) besitzt, wobei die Verstelleinrichtung eine Gewindespindel (10) aufweist, die über ein Kegelradgetriebe (11, 12) mit Hilfe eines außerhalb des Gehäuses liegbaren Betätigungsrades (13) verdrehbar ist und die Gewindespindel mit einer Spindelmutter (19) in Eingriff steht, deren Bewegung auf einen an der zumindest einen verschwenkbaren Leuchteinheit angreifenden Verstellkopf (20) übertragen ist,
**dadurch gekennzeichnet, dass**
die Verstelleinrichtung (9) als von dem Scheinwerfergehäuse (2) trennbares Verstellmodul (M) ausgebildet ist und einen um eine Schwenkachse (s) schwenkbaren, im Inneren des Scheinwerfergehäuses, wenn die Verstelleinrichtung im Scheinwerfergehäuse montiert ist, anordenbaren und an einem inneren Abschnitt (I) des Verstellmoduls (M) gelagerten Kipphebel (30) aufweist, der über eine Gelenkverbindung (28-29) mit der Spindelmutter (19) in Antriebsverbindung steht, und der Verstellkopf (20) an dem Kipphebel (30) sitzt.

2. Verstelleinrichtung (9) nach Anspruch 1, **dadurch gekennzeichnet, dass** der Kipphebel (30) mit Hilfe von Achsstummeln (31) in zwei gegenüberliegenden Schlitzen (32) an dem inneren Gehäuseabschnitt (I) gelagert ist.

3. Verstelleinrichtung (9) nach Anspruch 1 oder 2, **dadurch gekennzeichnet, dass** der Kipphebel (30) zwei zueinander im Wesentlichen parallele Stege (30a, 30b) besitzt und zwischen den Stegen der Verstellkopf (20) sowie ein Mitnehmerkopf (29) angeordnet sind, wobei der Mitnehmerkopf (29) unter Bildung der Gelenkverbindung (28-29) von einer Mitnehmergabel (28) umfasst ist.

4. Verstelleinrichtung (9) nach Anspruch 3, **dadurch gekennzeichnet, dass** die Mitnehmergabel (28) Teil eines mit der Spindelmutter (19) verbundenen Gleitstücks (27) ist.

5. Verstelleinrichtung (9) nach einem der Ansprüche 1 bis 4, **dadurch gekennzeichnet, dass** die Verstelleinrichtung (9) als von dem Scheinwerfergehäuse (2) trennbares Modul (M) ausgebildet ist, welches mit einem inneren Abschnitt (I) in das Scheinwerfergehäuse einführbar und mit diesem über einen Bajonettverschluss (22-23) verbindbar ist, wobei zwischen einem zu einem äußeren Abschnitt (A) des Verstellmoduls gehörigen Ringflansch (24) und dem Scheinwerfergehäuse ein Dichtring (26) vorgesehen ist.

6. Verstelleinrichtung (9) nach Anspruch 5, **dadurch gekennzeichnet, dass** das Modul (M) einen ersten rohrförmigen Gehäuseabschnitt (17) besitzt, in dem eine mit dem Betätigungsrad (13) und einem ersten Kegelzahnrad (11) verbundene Welle (14) untergebracht ist, sowie einen zweiten rohrförmigen Gehäuseabschnitt (18) besitzt, der unter einem im Wesentlichen dem Kegelradgetriebe (11, 12) zueignen Winkel zu dem ersten Gehäuseabschnitt verläuft, bei eingebautem Modul die Wand des Scheinwerfergehäuses (2) durchsetzt und ein zweites Kegelzahnrad (12), zumindest einen Teil der Gewindespindel (10) und die Spindelmutter (19) aufnimmt.

7. Verstelleinrichtung (9) nach einem der Ansprüche 1 bis 6, **dadurch gekennzeichnet, dass** die Drehachsen der beiden Kegelzahnräder (11, 12) unter einem rechten Winkel zueinander verlaufen.

8. Kraftfahrzeugscheinwerfer (1) mit zumindest einer Verstelleinrichtung (9, 9', 9") nach einem der vorgehenden Ansprüche.

## Claims

1. An adjustment device (9) for a motor vehicle headlamp (1) having at least one lighting unit (3) which can be swivelled in at least one direction and which is housed in a headlamp housing (2), wherein the adjustment device has a threaded spindle (10) which is rotatable via a bevel gear drive (11, 12) by means of an actuating wheel (13) which can be located outside of the housing, and wherein the threaded spindle is engaged with a spindle nut (19) whose movement is transferred onto an adjustment knob (20) acting upon the at least one lighting unit that can be swivelled, **characterized in that**
the adjustment device (9) is designed as an adjustment module (M) separable from the headlamp housing (2) and that it has a tilt lever (30) which can be swivelled about a swivel axis (s), can be arranged in the interior of the headlamp housing when the adjustment device is mounted inside the headlamp housing, is supported on an interior section (I) of the adjustment module (M), and is linked to the spindle nut (19) in a drive connection via an articulated joint (28-29), and **characterized in that** the adjustment knob (20) is located on the tilt lever (30).

2. The adjustment device (9) according to Claim 1, **characterized in that** the tilt lever (30) is supported on the interior housing section (I) by means of stub shafts (31) in two opposite slots (32).

3. The adjustment device (9) according to Claim 1 or 2, **characterized in that** the tilt lever (30) has two essentially parallel bars (30a, 30b) and that the adjustment knob (20) as well as a carrier head (29) are arranged between the bars, wherein the carrier head (29) is surrounded by a carrier yoke (28) to form the articulated joint (28-29).

4. The adjustment device (9) according to Claim 3, **characterized in that** the carrier yoke (28) is part of a sliding block (27) connected to the spindle nut (19) .

5. The adjustment device (9) according to any one of Claims 1 to 4, **characterized in that** the adjustment device (9) is designed as a module (M) separable from the headlamp housing (2), which module can be inserted into the headlamp housing with an interior section (I) and connected with the housing via a bayonet mount (22-23), wherein a seal ring (26) is provided between a ring flange (24) associated with an exterior section (A) of the adjustment module and the headlamp housing.

6. The adjustment device (9) according to Claim 5, **characterized in that** the module (M) has a first tube-shaped housing section (17), in which a shaft (14) connected to the actuating wheel (13) and to a first bevel gear (11), as well as a second tube-shaped housing section (18), which extends essentially at the same angle to the first housing section as the bevel gear drive (11, 12), extends through the wall of the headlamp housing (2) when the module is installed, and receives a second bevel gear (12), at least a portion of the threaded spindle (10) and the spindle nut (19).

7. The adjustment device (9) according to any one of Claims 1 to 6, **characterized in that** the rotational axes of the two bevel gears (11, 12) extend at a right angle to each other.

8. A motor vehicle headlamp (1) having at least one adjustment device (9, 9', 9") according to any one of the preceding claims.

## Revendications

1. Dispositif de réglage (9) pour un phare de véhicule automobile (1), lequel possède au moins une unité d'éclairage (3) montée dans un boîtier de phare (2), pivotable dans au moins une direction, sachant que le dispositif de réglage comporte une tige filetée (10), qui peut être tournée par un renvoi d'angle à pignons coniques (11, 12) à l'aide d'une roue de manœuvre (13) pouvant être située à l'extérieur du boîtier et la tige filetée vient en prise avec un écrou de tige (19), dont le mouvement est transmis à une tête de réglage (20) en prise sur au moins une unité d'éclairage pivotable,
**caractérisé en ce que**
le dispositif de réglage (9) est constitué sous la forme d'un module de réglage (M) séparable du boîtier de phare (2) et comporte un levier basculant (30) pivotable autour d'un axe de pivotement (s), pouvant être disposé à l'intérieur du boîtier de phare, si le dispositif de réglage est monté dans le boîtier de phare, et logé sur une section intérieure (I) du module de réglage (M), qui est en liaison d'entraînement par le biais d'une liaison articulée (28-29) avec l'écrou de tige (19) et la tête de réglage (20) est placée sur le levier basculant (30).

2. Dispositif de réglage (9) selon la revendication 1,
**caractérisé en ce que** le levier basculant (30) est logé à l'aide de tourillons (31) dans deux fentes opposées (32) sur la section de boîtier intérieure (I).

3. Dispositif de réglage (9) selon la revendication 1 ou 2, **caractérisé en ce que** le levier basculant (30) possède deux entretoises (30a, 30b) pour l'essentiel parallèles l'une à l'autre et la tête de réglage (20) ainsi qu'une tête d'entraînement (29) sont disposées entre les entretoises, sachant que la tête d'entraînement (29) est englobée par une fourche d'entraîneur (28) en formant la liaison articulée (28-29) .

4. Dispositif de réglage (9) selon la revendication 3,
**caractérisé en ce que** la fourche d'entraînement (28) fait partie d'une pièce coulissante (27) reliée à l'écrou de tige (19).

5. Dispositif de réglage (9) selon l'une quelconque des revendications 1 à 4, **caractérisé en ce que** le dispositif de réglage (9) est constitué sous la forme d'un module (M) séparable du boîtier de phare (2), lequel peut être introduit avec une section intérieure (I) dans le boîtier de phare et peut être relié à celui-ci par le biais d'une fermeture à baïonnette (22-23), sachant qu'une bague d'étanchéité (26) est prévue entre une bride annulaire (24) appartenant à une section extérieure (A) du module de réglage et le boîtier de phare.

6. Dispositif de réglage (9) selon la revendication 5,
**caractérisé en ce que** le module (M) possède une première section de boîtier de forme tubulaire (17), dans laquelle est monté un arbre (14) relié à la roue de manœuvre (13) et un premier pignon conique (11), et possède une deuxième section de boîtier (18) de forme tubulaire, qui passe sous un angle dédié pour l'essentiel au renvoi d'angle à pignons coniques (11, 12) par rapport à la première section de boîtier, traverse la paroi du boîtier de phare (2) une fois le module monté et un deuxième pignon conique (12) loge au moins une partie de la tige filetée (10) et l'écrou de tige (19).

7. Dispositif de réglage (9) selon l'une quelconque des revendications 1 à 6, **caractérisé en ce que** les axes de rotation des deux pignons coniques (11, 12) passent à un angle droit l'un par rapport à l'autre.

8. Phare de véhicule automobile (1) avec au moins un dispositif de réglage (9, 9', 9") selon l'une quelconque des revendications précédentes.
